# EUROPEAN PATENT SPECIFICATION

(11) **EP 3 430 889 B1**
(45) Date of publication and mention of the grant of the patent: **02.09.2020**
(21) Application number: 18178956.1
(22) Date of filing: 21.06.2018
(51) Int. Cl.: A01J 5/017, A01J 7/02, G02B 27/00

(54) **DAIRY ANIMAL TREATMENT DEVICE**
TIERBEHANDLUNGSEINRICHTUNG
DISPOSITIF DE TRAITEMENT D'UN ANIMAL LAITIER

(30) Priority: 21.07.2017 NL 2019314
(43) Date of publication of application: 23.01.2019
(73) Proprietor: Lely Patent N.V., 3147 PB Maassluis (NL)
(72) Inventor: VAN DER PANT, Diederik Joost, 3147 PB Maassluis (NL)
(74) Representative: Octrooibureau Van der Lely N.V.

(56) References cited:
- EP-A1- 1 253 440
- EP-A2- 1 608 152
- WO-A1-00/51417
- WO-A1-2014/204391

## Description

The present invention relates to a dairy animal treatment device for performing an animal-related operation on a dairy animal, and comprising an optical animal-part detection device for optically detecting an animal part of the dairy animal and for generating an information signal regarding the detected animal part, in particular a position information signal, a control unit which is configured to receive the information signal and to perform the animal-related operation on the basis of the information signal received, wherein the optical animal-part detection device comprises a light source for emitting optical radiation, and an electronic optical detector, a housing containing the optical detector, and provided with an optically transparent window, and a detector control unit for controlling the animal-part detection device, which animal-part detection device is configured to optically detect the animal part by receiving transmitted optical radiation reflected by the dairy animal and processing the received radiation to form the information signal, wherein the housing furthermore comprises a rotatable element.

Such dairy animal treatment devices are known per se, for example in the form of the Lely Astronaut® milking robot. This has a teat detection system which comprises a housing with a laser, a rotating multiple mirror for displaying laser lines on a teat of a dairy animal, and a detector, in order to determine the position of the teat with respect to the teat detection system by means of reflected laser lines. On the basis of the determined position, the milking robot can then attach a milking cup to the teat. See e.g. EP 1 253 440 A1, which discloses the preamble of claim 1.

A problem of the known device is the fact that it does not always function as it should. For example, under unfavourable weather conditions, it is possible for the attachment process to malfunction. In this case, it should be noted that, for example, milking robots are increasingly being used nowadays in pens and are then often prone to the elements. Such malfunctions may also occur after the device has been cleaned, in particular in warm weather.

It is an object of the present invention to provide a dairy animal treatment device of the kind described in the preamble which functions satisfactorily under an increased number of circumstances.

The invention achieves this object by means of a dairy animal treatment device according to claim 1.

The invention uses the insight that one reason for the fact that the device does not always function as it should is that the ingress of water vapour may cause condensation on the window in the housing when it is relatively cold, resulting from external circumstances, such as for example cold weather or a rinse with (cold) water. In practice, it is particularly during warm weather and when rinsing with cold tap water that quite significant condensation problems occur. The rotatable part provides an internal air flow which may cause the condensation to evaporate completely or partly. In this case, it may be advantageous if parts contained in the housing which generate heat, such as the motor for rotating the component and/or the electronics, in particular the pcb of the control unit, add their heat to this internal air flow. The heat may be an instantly generated heat or for example residual heat from previous detection operations.

In this context, "a demisting operation, independently from said optical detection" is understood to mean that the demisting operation does not necessarily take place during optical detection. Rotating the rotatable element may in this case take place prior to the optical detection, and even after the optical detection. Obviously, the rotatable element may also rotate during the optical detection, as is the case in the prior art, but not only is rotation in the prior art strictly coupled to optical detection, but it also only begins after the start of said detection, so that the problem which the present invention solves will still occur.

Nowadays, it is becoming more and more common for a dairy animal shed to be very open, with the animals receiving large amounts of daylight and fresh air. The milking robot(s), which is (are) freely accessible to the dairy animals, will therefore be exposed more often to weather conditions which are less favourable for optical observations, such as cold and moist air. In particular during cooling streams, such as of air and/or (cleaning) water passing the housing, in particular the window surface, water vapour which is present in the housing will condensate on the cold surfaces, such as said optical window. As such, the housing is hardly permeable to water (vapour). However, it is very difficult to prevent that, over time, a certain amount of water vapour will, slowly but surely, penetrate into the housing. This is aided by the fact that the detection device, and the housing in particular, will often be cleaned. The reason for this is that the environment in which the detection device operates, namely an animal shed filled with dairy animals, is subject to extreme soiling, whereas, for the purposes of optical detection, soiling has to be prevented as much as possible. Because of all the cleaning, the housing will be exposed to much more water than is due to weather conditions. The risk of water vapour penetrating into the housing is thus increased and, as in many cases cold tap water is used for cleaning, said cleaning operation may often also cause additional condensation. Partly for this reason, it is of even greater importance to counteract the detrimental effects of water vapour in particular with dairy animal treatment devices.

Particular embodiments are described in the dependent claims, as well as in the following part of the description.

The invention provides for the rotatable component to rotate independently of the optical detection operation. By means of such a demisting operation, detection can take place as much as possible with a demisted window, in contrast to the known device, in which detection starts immediately and may thus be affected by a window which still has condensation on it. In the latter case, the control unit has to wait before processing information or has to process information which may possibly be inaccurate, or at least may have been adversely affected by the condensation. Subsequent operations and the like which fail due to inaccurate information unnecessarily waste a lot of time and may disturb or irritate the animals. By contrast, the present invention already provides reliable information from the start of the detection, at least has a much greater chance of achieving this. In addition, it should be noted that it is rare for a detection action to start without any preparatory action involving another component of the animal treatment device. Often, for example, a robot arm on which the animal-part detection device is situated is first brought to a starting position, based on historical or other external data. It is also possible to opt to carry out one or more other operations first which do not require accurate detection results, or at least less accurate detection results, for example because they may be executed on the sole basis of historical data. It is advantageous if the rotatable element can already be rotated during this time, or a part thereof. It should be noted that the rest of the animal-part detection device, such as the light source and/or the electronic optical detector, does not yet have to be switched on.

Advantageously, the predetermined time is at least 5 seconds, in particular at least 30 seconds. The predetermined time is, in particular, at most 2 minutes. Such a duration for the demisting operation achieves a satisfactory balance between a sufficient degree of demisting and additional energy consumption and wear, although it is even possible to rotate permanently, because the energy consumption when continuing to rotate is low, although in that case, there might however be a higher degree of wear. In practice, it has been found that a demisting operation of about 1 minute often yields a statisfactory result. All this may depend somewhat on the external conditions, such as the temperature of the air and/or cleaning water.

According to a first alternative of the invention, the detector control unit is configured to rotate the rotatable element for the predetermined time prior to the optical detection operation. In this case, the insight is used that a demisting operation is not necessary if an optical detection operation will not follow immediately, but that, conversely, an optical detection operation will benefit from a prior demisting operation. In this case, the term "prior" means an optical detection operation which follows immediately, in which case the rotatable element will, in practice, continue to rotate, or a demisting operation which is followed by an optical detection operation within at most a predetermined time period, such as within 1 to 3 minutes, or without a cleaning action taking place. The detector control unit is then configured in a corresponding manner.

According to a second alternative of the invention, the detector control unit is configured to rotate the rotatable element from a predetermined point in time. This predetermined point in time may be a point in time or an optionally regular sequence, so that the demisting takes place on a regular basis. This works well, for example, if the formation of condensation is the result of a low or dropping temperature, which will also take place at a relatively gradual pace. It is also possible for the point in time for each demisting operation to be determined, so that there is, for example, a waiting time or the like. In other words, the point in time may be an absolute point in time or a relative point in time with respect to an operation or another moment.

In embodiments, the animal-part detection device comprises a cleaning device which is configured to clean the window by means of a jet of liquid. As has already been described above, cleanliness is advantageous for an optical detector. Now, it is possible to clean the detector by hand, for example using a garden hose or high-pressure cleaner. Both will often use cold tap water. Advantageously, however, the animal-part detection device itself comprises a cleaning device, so that an optimum cleaning operation can be reliably performed, in particular with regard to the timing thereof. After all, a cleaning of the window may then be performed in each case after each milking operation or after a failed attempt to attach the milking cups, after a specific time has lapsed, or otherwise. A fitted cleaning device will also often use cold tap water, so that the invention may also have its advantages in that case. In an important refinement, the cleaning device comprises a heating device for cleaning liquid for the jet of liquid, which heating device advantageously heats the liquid at least to ambient temperature. In this way, the window will not cool down after the cleaning, but will even be heated, so that no additional condensation will occur, or demisting may even be supported. It should be noted that, in this case, it may be sufficient to give the cleaning liquid to be used sufficient time to heat up as a result of the environment.

In embodiments, the detector control unit is configured to perform the demisting operation in dependence on the performing of the cleaning operation. In particular, the detector control unit is configured to perform the demisting operation after the cleaning operation. In this case, use is made of the insight that a cleaning operation may actually cause condensation, so that performing a demisting operation may in this case have a preventative effect. In addition, such a cleaning operation is, in practice, often performed at the end of a milking operation, at least the end of an optical detection, such as for the purpose of attaching milking cups, so that then the time until a subsequent optical detection operation will be longest and a demisting operation may also be carried out without delay.

According to the invention, the light source comprises a laser light source, in particular a pulsed light source. According to the invention, the light source is accommodated in the housing. Such light sources combine a high luminosity with good control and good colour definition. This is particularly true for pulsed sources, which often have an even higher luminosity and thus are less affected by ambient light. Because the light source is accommodated in the housing, it is not only better protected against soiling and other extenal influences, but the heat generated can also be used in an optimum manner to evaporate any condensation. An example of a pulsed laser or LED source is a 3D time-of-flight camera. In embodiments, but not according to the invention, the rotatable element comprises a fan. Such a fan may be optimized in order to bring about a favourable air flow, such as an air flow which is accurately directed at the window.

According to the invention, the rotatable element comprises a mirror for directional control of the light transmitted by the light source, in particular a body provided with a set of mirrors at different angles. An example thereof is the teat detection system of the Lely Astronaut®, which comprises a rotatable polygon in the housing to which mirrors are attached at different angles and onto which a laser shines a light beam. When rotating the polygon, the laser beam impinges on the different mirrors, so that the laser generates different lines which are mutually parallel. By means of reflections on a teat or another animal part, the control unit then determines the position thereof. The further details of such a detection device are not relevant here. However, it is important in this case that the laser is situated in the housing, together with its electronic control unit, and that rotation of the polygon with plane mirrors will cause a displacement of air which can bring about demisting.

In embodiments, the dairy animal treatment device comprises a milking robot with one or more milking cups and a robot arm for attaching the milking cups to the dairy animal. This is an important embodiment, in which a good view of the teats is of great importance. In addition, it will have to be cleaned often, because the detection device will often be underneath the dairy animal and is thus susceptible to soiling with manure, milk and the like. In this way, this embodiment in particular will be exposed to water more often. In embodiments, the animal-part detection device therefore comprises a teat-detection device. However, it should be noted that such a detection device does not necessarily have to form part of a milking robot. Thus, conventional milk devices are also known in the form of rotatory milking parlours, in which the cups are attached by hand, but which are provided with a spraying robot for spraying the teats with a so-called teat dip. This spraying robot may likewise be equipped with a teat detection system which, according to the invention, is provided with a rotatable component for a demisting operation. After all, this robot will also be subjected to the same conditions.

In particular, the robot arm has a rest position on one side of a dairy animal to be milked, and the robot arm is controllable by the control unit in order to attach the one or more milking cups during an attachment operation from said rest position, wherein the detector control unit is configured to start the demisting operation in dependence on the start of the attachment operation. As soon as the attachment operation starts, that is to say the signal is given to or by the control unit that the robot arm may start to move in order to attach the one or more milking cups, it is approximately clear when the detection device has to have an optimum view. After all, it will always take a certain amount of time before the robot arm with the detection device attached thereto is situated in a position underneath the dairy animal for the purpose of attaching the milking cups. During this start-up time, or at least during part thereof, the demisting operation may be carried out. The control unit is then for example configured to start the demisting operation a predetermined period of time after the attachment operation has started, and in particular when the attachment operation starts, so that a maximum time period is available for the demisting operation.

In an alternative or complementary embodiment, the dairy animal treatment device comprises an animal condition measuring device, in particular a body condition score-measuring device. Body condition score (BCS) is a system in which the degree of fatness of a dairy animal is expressed by a number between 1 and 5. Systems have already been described which are able to determine the BCS by means of optical detectors, such as laser scanners or 3D cameras, by means of optically obtained profiles of (parts of) the animal body, in particular the part around the base of the tail. The dairy animal treatment device may furthermore comprise, for example, a feed device which is operatively connected to the control unit. On the basis of the BCS which is determined, the control unit may, for example, adjust the feeding regime with regard to composition, amount and/or frequency. Thus, US5412420 discloses a three-dimensional fenotypic measuring system for, for example, dairy animals, which measures an animal profile by means of a laser scanner and compares it to a desired profile and, if desired, provides information about the quality of the animal, often a meat animal, based on the comparison.

Other treatment devices are also possible, for example using a rumen fill measuring device which is known per se, on the basis of which the control unit may adjust the feeding regime or, optionally, emit a warning to the farmer.

The invention also relates to an animal shed according to claim 12 with a dwelling space for dairy animals, as well as a dairy animal treatment device according to the invention. Again, it is emphasized here that the invention offers advantages when used with dairy animals in an animal shed which is subjected to relatively large temperature differences. Also, an animal shed is a relatively dirty environment, in which the frequent use of cleaning water will also have a detrimental effect on the animal-part detection device, so that the present invention will also offer advantages for this reason. In particular, the dwelling space comprises an outside dwelling space, where the temperature differences may be even greater. In particular, also as a result of draughts or otherwise increased ventilation, this may lead to a lower temperature in or near the animal-part detection device, so that the present invention may also offer advantages for this reason.

The invention will now be explained in more detail by means of the drawing, in which some non-limiting embodiments are shown, in which:
- Fig. 1 highly diagrammatically shows a top view of an animal shed 1 according to the invention,
- Fig. 2 highly diagrammatically shows a cross section of the detector 8 from Fig. 1, and
- Fig. 3 diagrammatically shows a top view thereof.

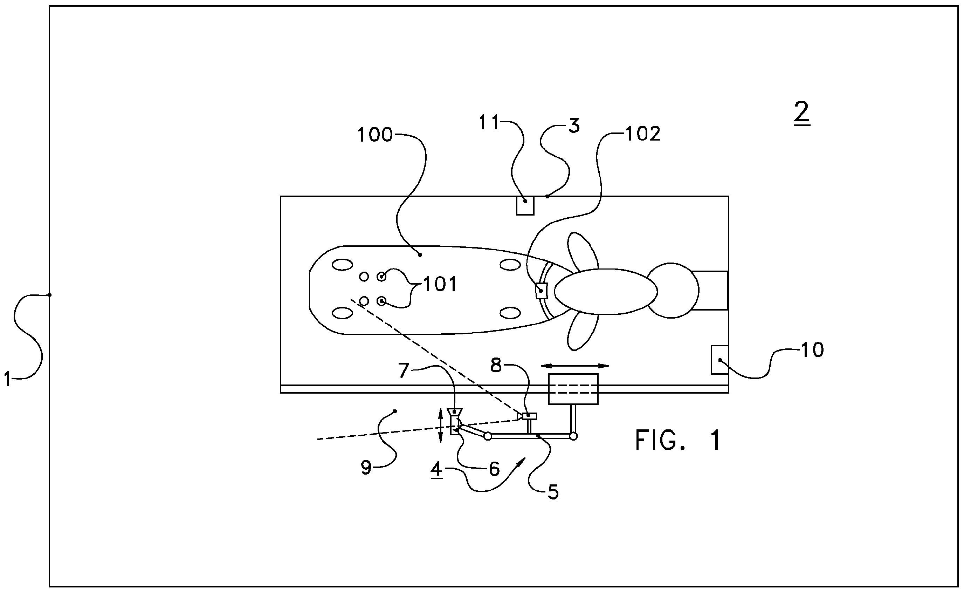

Fig. 1 highly diagrammatically shows a top view of an animal shed 1 according to the invention. The animal shed 1 comprises a dwelling space 2 containing a milking stall 3 with a milking robot 4 which comprises a robot arm 5 with a gripper 6, milking cups 7 and a detector 8 having an image field 9, as well as a control unit 10 and a tag reader 11. Reference numeral 100 denotes a dairy animal, having teats 101 and an ID tag 102.

If a dairy animal 100 which is situated in the dwelling space 2 reports in the milking stall 3 in order to be milked, the tag reader 11 will read the ID tag 102 on a collar on the animal. This enables the control unit 10 which is coupled thereto to determine the identity of the dairy animal 100 and, if the animal has to be milked, activate the milking robot 4. The control unit 10 will then move the robot arm 5 of the milking robot from a rest position outside the milking stall 3 to next to the dairy animal 100 to be milked in the longitudinal and transverse directions, as is indicated by the double arrows, in order to position the image field 9 of the detector 8 in such a way that the teats 101 come into the image field. Once the teats are situated in the image field, the detector 8, at least the control unit 10 connected thereto, can determine the teat positions with respect to the robot arm 5, so that the robot arm can attach the milking cups 7 to the teats on the basis of the determined teat positions. The illustrated robot arm has a gripper 6 by means of which the milking cups 7 are gripped individually in order to be attached, but may, alternatively, also comprise a holder for all milking cups which are releasably arranged thereon.

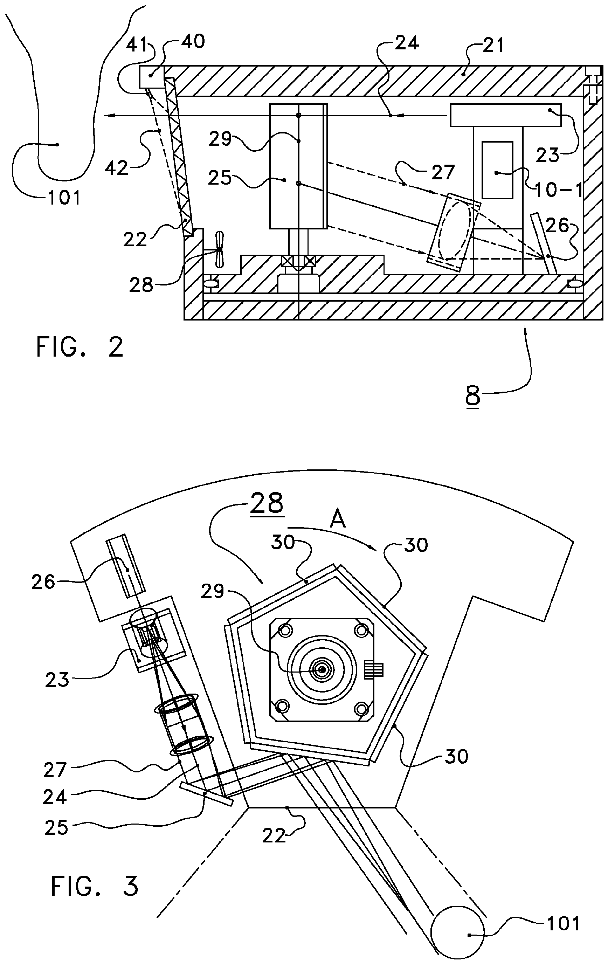

Obviously, it is best for the image field 9 of the detector not to be influenced by formation of condensation or the like in the detector 8. Any condensation which may have formed has to have disappeared at the point in time when the teats are or come on screen. It takes some time to move the robot arm 5 with milking cup(s) 7. According to the invention, this time is used to perform a demisting operation which will be explained with reference to Fig. 2.

Fig. 2 highly diagrammatically shows a cross section of the detector 8 from Fig. 1 for detecting teats 101. Fig. 3 shows a diagrammatical top view thereof. The detector 8 comprises a housing 21 with a window 22 and a light source 23 inside which emits and directs radiation 24 via a rotatable mirror element 25, as well as an optical detector 26 for receiving reflected radiation 27. Reference numeral 28 denotes a separate fan and reference numeral 29 a rotation axle for the mirror element which has five mirror planes 30. Reference numeral 10-1 denotes a detector control unit. Reference numeral 40 denotes a cleaning device with a spray nozzle 41 for a jet of liquid 42. For details regarding a similar detector 8, reference should be made to EP1253440, which states that such details are largely irrelevant for the present invention and hereafter will only be mentioned if they contribute to the invention.

The light source 23 of the detector 8 is a laser diode and emits a beam of light 24 which is transmitted in strip form via the rotatable mirror element 25 and the window 22 and impinges on, for example, a teat 101 in the process. The reflected radiation 27 re-enters via the window 22 and is displayed on the optical detector 26, for example a diode sensor with a series of photodiodes, via a lens system. From the combined signals of the photodiodes of the optical detector 26, the control unit 10-1 which is coupled thereto, at least possibly the control unit 10 (not shown separately here) which is coupled thereto, can determine the position of the teat 101. To this end, the reader is again referred to EP1253440.

The detector 8 is often situated underneath a dairy animal for a long time and at least in an animal shed environment, where a lot is present, and which environment is often cleaned using water from, for example, a hose. The detector 8 itself also has to be cleaned often, for example due to adhering manure or other dirt. To this end, for example, a cleaning device 40 is provided with a spray nozzle 41, as is the case in the illustrated embodiment, for spraying a jet of liquid 41 onto the window 22. The cleaning device 40 is controlled by the control unit 10 and may clean, for example, after every milking operation, after every 2nd, 3rd, etc. milking operation etc. In any case, the window 22, and thus the detector 8 in its entirety, will often be exposed to a jet of liquid, often water with or without cleaning agents. In addition, an animal shed environment often experiences temperature variations and high atmospheric humidity. Slowly but surely, water vapour will inevitably penetrate into the housing 21. If the window 22 is cold(er), condensation may be deposited thereon, which may adversely affect the view of the optical detector 26. It should be noted here that the same also applies to other types of optical detectors, such as videocameras and 3D cameras.

In all cases, it is advantageous to prevent or counteract the formation of condensation as much as possible. To this end, but not according to the invention, a separate fan 28 is provided. This may be activated by the detector control unit 10-1, or possibly the control unit 10 which is coupled thereto, in order to move the air inside the housing 21 and thus to move, for example, local relatively hot air towards the window 22, as a result of which condensation can evaporate. In this case, use may advantageously be made of the fact that the light source 23, or its power supply, or possibly another component, such as the optical detector 26 of a motor (not described separately here) for the rotatable mirror element 25, will generate heat, which heat can be used effectively to heat the window 22.

According to the invention, us is made of the rotatable element 25. This comprises one or more plane mirrors, in this case five. When rotating the mirror element 28 about the rotation axle 29, air will also be made to move, so that in principle the same condensation-removing demisting operation is achieved.

Often, it will take some time before the demisting operation will become effective. This may depend on a few factors, such as the amount of moisture which has meanwhile penetrated into the housing 21, the temperature of the window 22, the atmospheric humidity of the ambient air, which could, after all, also condensate on the window, etc. Advantageously, however, the (detector) control unit 10(-1) is configured to cause a demisting operation to be performed for a predetermined time period which will be sufficient in many, if not most, cases. Such a time period may be set, for example, once, such as in dependence of climatological conditions and/or, for example, the location of the detector in the animal shed. Simple tests may suffice in order to be able to set a suitable time period.

Above, it has already been mentioned briefly that some time may pass between identification of a dairy animal and the moment at which the detector has to be available with completely or at least partly removed condensation. This time is in particular, but not only, the time up to the moment of detection of the teats. This detection operation may be for the sake of attaching a milking cup, but also for performing a teat cleaning operation, for which purpose the current teat position should advantageously be known. Some time may be allowed to pass between the moment the dairy animal 100 is detected and the ID tag 102 is read, because the animal, for example, first has to find its position in the milking stall in a calm manner, for example by feeding from a feed trough which has been provided. Subsequently, the control unit 10 will move the robot arm 5 to a suitable spot in order to position itself underneath the dairy animal 100. The demisting operation may take place for the duration of this entire time period, or for an optionally predetermined part thereof. This time period may be, for example, some tens of seconds to 1 to 2 minutes. It should be noted that it is often not useful to demist for an even longer period of time, since the amounts of air and heat which are available inside the housing of the detector 8 are limited. Nevertheless, it is possible to set a different time period.

The illustrated embodiments only serve to explain the invention without limiting the latter. The scope of protection is defined by the attached claims.

## Claims

1. Dairy animal treatment device (4) for performing an animal-related operation on a dairy animal, and comprising
- an optical animal-part detection device (8) for optically detecting an animal part of the dairy animal and for generating an information signal regarding the detected animal part, in particular a position information signal,
- a control unit (10) which is configured to receive the information signal and to perform the animal-related operation on the basis of the information signal received, wherein the optical animal-part detection device (8) comprises
a light source (23) for emitting optical radiation, and an electronic optical detector (26),
a housing (21) containing the optical detector, and provided with an optically transparent window (22), and
a detector control unit (10-1) for controlling the animal-part detection device,
which animal-part detection device is configured to optically detect the animal part by receiving transmitted optical radiation reflected by the dairy animal and processing the received radiation to form the information signal,
wherein the light source comprises a laser, that is accommodated in the housing,
wherein the housing furthermore comprises a rotatable element (25), wherein the rotatable element comprises a mirror (30) for directional control of the light transmitted by the light source, **characterized in that**
the detector control unit (10-1) is configured to perform a demisting operation, independently from said optical detection, comprising rotating said rotatable element (25) for at least a predetermined time and/or from a predetermined point in time.

2. Device according to claim 1, wherein the rotatable element comprises a body provided with a set of mirrors at different angles, in particular a rotatable polygon.

3. Device according to one of the preceding claims, wherein the predetermined time is at least 5 seconds, in particular at least 30 seconds.

4. Device according to one of the preceding claims, wherein the detector control unit is configured to rotate the rotatable element for the predetermined time prior to the optical detection operation.

5. Device according to one of the preceding claims, wherein the animal-part detection device comprises a cleaning device which is configured to perform a cleaning operation, comprising cleaning the window by means of a jet of liquid.

6. Device according to Claim 5, wherein the detector control unit is configured to perform the demisting operation in dependence on the performing of the cleaning operation.

7. Device according to Claim 6, wherein the detector control unit is configured to perform the demisting operation after the cleaning operation.

8. Device according to one of the preceding claims, wherein the light source comprises a pulsed light source.

9. Device according to one of the preceding claims, wherein the dairy animal treatment device comprises a milking robot with one or more milking cups and a robot arm for attaching the milking cups to the dairy animal.

10. Device according to Claim 9, wherein the robot arm has a rest position on one side of a dairy animal to be milked, and the robot arm is controllable by the control unit in order to attach the one or more milking cups during an attachment operation from said rest position, wherein the detector control unit is configured to start the demisting operation in dependence on the start of the attachment operation, in particular upon starting the attachment operation.

11. Device according to one of the preceding claims, wherein the animal-part detection device comprises a teat detection device.

12. Animal shed with a dwelling space for dairy animals, as well as a dairy animal treatment device according to one of Claims 1-11.

## Patentansprüche

1. Milchtierbehandlungseinrichtung (4) zum Durchführen eines tierbezogenen Vorgangs an einem Milchtier und umfassend:
- eine optische Tierteil-Erkennungseinrichtung (8) zum optischen Erkennen eines Tierteils des Milchtiers und zum Erzeugen eines Informationssignals, insbesondere eines Positionsinformationssignals, in Bezug auf den erkannten Tierteil,
- eine Steuereinheit (10), die zum Empfangen des Informationssignals und Durchführen des tierbezogenen Vorgangs auf der Basis des empfangenen Informationssignals ausgelegt ist,
wobei die optische Tierteil-Erkennungseinrichtung (8) umfasst:
eine Lichtquelle (23) zum Emittieren optischer Strahlung und einen elektronisch-optischen Detektor (26),
ein Gehäuse (21), das den optischen Detektor enthält und mit einem optisch transparenten Fenster (22) versehen ist, und
eine Detektorsteuereinheit (10-1) zum Steuern der Tierteil-Erkennungseinrichtung,
wobei die Tierteil-Erkennungseinrichtung zum optischen Erkennen des Tierteils durch Empfangen von gesendeter optischer Strahlung, die vom Milchtier reflektiert wird, und Verarbeiten der empfangenen Strahlung zum Bilden des Informationssignals ausgelegt ist,
wobei die Lichtquelle einen Laser umfasst, der im Gehäuse untergebracht ist,
wobei das Gehäuse ferner ein drehbares Element (25) umfasst,
wobei das drehbare Element einen Spiegel (30) zur Richtungssteuerung des von der Lichtquelle gesendeten Lichts umfasst, **dadurch gekennzeichnet, dass**
die Detektorsteuereinheit (10-1) so ausgelegt ist, dass sie unabhängig von der optischen Erkennung einen Entfeuchtungsvorgang durchführt, der ein Drehen des drehbaren Elements (25) für mindestens eine vorbestimmte Zeit und/oder ab einem vorbestimmten Zeitpunkt umfasst.

2. Einrichtung nach Anspruch 1, wobei das drehbare Element einen Körper, insbesondere ein drehbares Vieleck, umfasst, der mit einem Satz von Spiegeln in verschiedenen Winkeln versehen ist.

3. Einrichtung nach einem der vorhergehenden Ansprüche, wobei die vorbestimmte Zeit mindestens 5 Sekunden, insbesondere mindestens 30 Sekunden beträgt.

4. Einrichtung nach einem der vorhergehenden Ansprüche, wobei die Detektorsteuereinheit so ausgelegt ist, dass sie das drehbare Element vor dem optischen Erkennungsvorgang für die vorbestimmte Zeit dreht.

5. Einrichtung nach einem der vorhergehenden Ansprüche, wobei die Tierteil-Erkennungseinrichtung eine Reinigungseinrichtung umfasst, die zum Durchführen eines Reinigungsvorgangs ausgelegt ist, der ein Reinigen des Fensters mittels eines Flüssigkeitsstrahls umfasst.

6. Einrichtung nach Anspruch 5, wobei die Detektorsteuereinheit zum Durchführen des Entfeuchtungsvorgangs in Abhängigkeit vom Durchführen des Reinigungsvorgangs ausgelegt ist.

7. Einrichtung nach Anspruch 6, wobei die Detektorsteuereinheit zum Durchführen des Entfeuchtungsvorgangs nach dem Reinigungsvorgang ausgelegt ist.

8. Einrichtung nach einem der vorhergehenden Ansprüche, wobei die Lichtquelle eine gepulste Lichtquelle umfasst.

9. Einrichtung nach einem der vorhergehenden Ansprüche, wobei die Milchtierbehandlungseinrichtung einen Melkroboter mit einem oder mehreren Melkbechern und einem Roboterarm zum Befestigen der Melkbecher am Milchtier umfasst.

10. Einrichtung nach Anspruch 9, wobei der Roboterarm eine Ruhestellung auf einer Seite eines zu melkenden Milchtiers aufweist, und der Roboterarm durch die Steuereinheit zum Befestigen des einen oder der mehreren Melkbecher während eines Befestigungsvorgangs aus der Ruhestellung gesteuert werden kann, wobei die Detektorsteuereinheit so ausgelegt ist, dass sie mit dem Entfeuchtungsvorgang in Abhängigkeit vom Beginn des Befestigungsvorgangs, insbesondere bei Beginn des Befestigungsvorgangs, beginnt.

11. Einrichtung nach einem der vorhergehenden Ansprüche, wobei die Tierteil-Erkennungseinrichtung eine Zitzenerkennungseinrichtung umfasst.

12. Tierstall mit einem Raum zur Unterbringung von Milchtieren sowie einer Milchtierbehandlungseinrichtung nach einem der Ansprüche 1 bis 11.

## Revendications

1. Dispositif de traitement pour animal laitier (4) destiné à réaliser une opération relative à l'animal sur un animal laitier, et comprenant :
- un dispositif de détection optique de partie d'animal (8) pour détecter optiquement une partie d'animal de l'animal laitier et pour générer un signal d'information concernant la partie d'animal détectée, en particulier un signal d'information de position,
- une unité de commande (10) qui est configurée pour recevoir le signal d'information et pour effectuer l'opération relative à l'animal sur la base du signal d'information reçu,
le dispositif optique de détection de partie d'animal (8) comprenant :
une source de lumière (23) pour émettre un rayonnement optique, et un détecteur optique électronique (26),
un boîtier (21) contenant le détecteur optique, et pourvu d'une fenêtre optiquement transparente (22), et
une unité de commande de détecteur (10-1) pour commander le dispositif de détection de partie d'animal,
lequel dispositif de détection de partie d'animal étant configuré pour détecter optiquement la partie d'animal en recevant le rayonnement optique transmis réfléchi par l'animal laitier et en traitant le rayonnement reçu pour former le signal d'information,
la source de lumière comprenant un laser, qui est logé dans le boîtier,
le boîtier comprenant en outre un élément rotatif (25),
l'élément rotatif comprenant un miroir (30) pour le contrôle directionnel de la lumière transmise par la source de lumière, le dispositif étant **caractérisé en ce que** :
l'unité de commande de détecteur (10-1) est configurée pour effectuer une opération de déshumidification, indépendamment de ladite détection optique, comprenant de faire tourner ledit élément rotatif (25) pendant au moins un temps prédéterminé et/ou à partir d'un point prédéterminé dans le temps.

2. Dispositif selon la revendication 1, dans lequel l'élément rotatif comprend un corps muni d'un ensemble de miroirs à différents angles, en particulier un polygone rotatif.

3. Dispositif selon l'une des revendications précédentes, dans lequel le temps prédéterminé est d'au moins 5 secondes, en particulier d'au moins 30 secondes.

4. Dispositif selon l'une des revendications précédentes, dans lequel l'unité de commande de détecteur est configurée pour faire tourner l'élément rotatif pendant le temps prédéterminé avant l'opération de détection optique.

5. Dispositif selon l'une des revendications précédentes, dans lequel le dispositif de détection de partie d'animal comprend un dispositif de nettoyage qui est configuré pour effectuer une opération de nettoyage, comprenant nettoyer la fenêtre au moyen d'un jet de liquide.

6. Dispositif selon la revendication 5, dans lequel l'unité de commande de détecteur est configurée pour effectuer l'opération de déshumidification en fonction de la réalisation de l'opération de nettoyage.

7. Dispositif selon la revendication 6, dans lequel l'unité de commande de détecteur est configurée pour effectuer l'opération de déshumidification après l'opération de nettoyage.

8. Dispositif selon l'une des revendications précédentes, dans lequel la source de lumière comprend une source de lumière pulsée.

9. Dispositif selon l'une des revendications précédentes, dans lequel le dispositif de traitement pour animal laitier comprend un robot de traite avec un ou plusieurs gobelets trayeurs et un bras de robot pour fixer les gobelets trayeurs à l'animal laitier.

10. Dispositif selon la revendication 9, dans lequel le bras de robot a une position de repos sur un côté d'un animal laitier à traire, et le bras de robot peut être commandé par l'unité de commande afin de fixer les un ou plusieurs gobelets trayeurs pendant une opération de fixation à partir de ladite position de repos, l'unité de commande de détecteur étant configurée pour démarrer l'opération de déshumidification en fonction du début de l'opération de fixation, en particulier lors du démarrage de l'opération de fixation.

11. Dispositif selon l'une des revendications précédentes, dans lequel le dispositif de détection de partie d'animal comprend un dispositif de détection de trayon.

12. Étable à animaux ayant un espace d'hébergement destiné à des animaux laitiers ainsi qu'un dispositif de traitement pour animal laitier selon l'une des revendications 1 à 11.
